# EUROPÄISCHE PATENTSCHRIFT

(11) **EP 1 727 639 B1**
(45) Veröffentlichungstag und Bekanntmachung des Hinweises auf die Patenterteilung: **17.06.2009**
(21) Anmeldenummer: 05715668.9
(22) Anmeldetag: 02.03.2005
(51) Int. Cl.: B23D 77/00, B23C 3/12

(54) **WERKZEUG UND VERFAHREN ZUM ENTGRATEN VON BOHRUNGEN**
TOOL AND METHOD FOR TRIMMING BOREHOLES
OUTIL ET PROCEDE POUR EBAVURER DES ALESAGES

(30) Priorität: 03.03.2004 DE 102004010372
(43) Veröffentlichungstag der Anmeldung: 06.12.2006
(73) Patentinhaber: Gühring, Jörg, Dr., 72458 Albstadt (DE)
(72) Erfinder: GAISER, Gilbert, Gühring OHG, 72488 Sigmaringen (DE)
(74) Vertreter: Winter, Konrad Theodor
(86) Internationale Anmeldenummer: PCT/EP2005/002200
(87) Internationale Veröffentlichungsnummer: WO 2005/084862

(56) Entgegenhaltungen:
- EP-A- 1 362 659
- GB-A- 546 973
- US-B1- 6 846 226

## Beschreibung

Die Erfindung betrifft ein drehantreibbares Schaftwerkzeug zum Entgraten von Bohrungen, die seitlich in eine beispielsweise zylindrische Ausnehmung münden, gemäß dem Oberbegriff des Anspruchs 1, sowie auf ein Verfahren zum Entgraten solcher Bohrungen gemäß Anspruch 37. Der Schaft ist dabei in einer Werkzeugaufnahme dreh-und verschiebefest einsetzbar und für eine Aufrechterhaltung einer Zentrierung in einem Bohrloch beim Entgratvorgang ausreichend stabil. Durch die von der Radialkraft-Erzeugungseinrichtung hervorgerufene umlaufende Radialkraft ist der Schneidkopf soweit auslenkbar, dass das beim Einführen des Schneidkopfs in eine Bohrung vorhandene radiale Spiel unter Nutzung der Elastizität des Schaftes beseitigbar ist.

Ein solches gattungsbildendes Werkzeug ist aus der am 19. 11. 2003 veröffentlichten Europäischen Patentanmeldung EP 1 362 659 Al (Anmeldenummer 03011272.6-1262) bekannt.

Es hat sich gezeigt, dass ein derartiges Werkzeug, wie es beispielsweise in den Figuren 20 bis 22 der Europäischen Patentanmeldung EP 1 362 659 A1 gezeigt ist, zuverlässig in der Lage ist, den an der Mündungsstelle einer Bohrung in eine Ausnehmung bei der spanenden Bearbeitung verbleibenden Grat oder Restspan sauber und schonend zu entfernen, indem der bezüglich der Bohrung rotierende Schneidkopf, nachdem er in die Bohrung so weit eingeführt worden ist, dass er radial innerhalb der zu entgratenden Stelle zu liegen kommt, mittels der Radialkraft-Erzeugungsvorrichtung in eine "kreisende" bzw. "taumelnde" Schab- oder Schneidbewegung entlang der Mündungsöffnung versetzt wird.

Die zumindest eine Schneidkante des Schneidkopfs bewegt sich dabei bezüglich der Innenoberfläche der Bohrung auf einer Zykloide, wodurch zuverlässig verhindert wird, dass an einer anderen Stelle der Bohrung eine Restspanbildung auftritt.

Das bekannte Werkzeug kann allerdings nur dann optimal eingesetzt werden, wenn die Verschneidungslinie der Mündungsstelle zwischen Bohrung und Ausnehmung eine relativ geringe aciale Erstreckung hat, was in der Regel dann der Fall ist, wenn die Achse der Bohrung im Wesentlichen senkrecht auf der Innenoberfläche der Ausnehmung steht oder - wenn die Ausnehmung ebenfalls von einer zylindrischen Ausnehmung gebildet ist - wenn der Durchmesser der Bohrung klein im Verhältnis zum Innendurchmesser der Ausnehmung ist und die Achsen von Bohrung und Ausnehmung einander rechtwinklig schneiden. Denn nur so kann bei Anwendung einer einfachen Bewegungskinematik für den Schneidkopf wirksam ausgeschlossen werden, dass der Schneidkopf dann, wenn er mit seiner zumindest einen Schneidkante diejenige Stelle der Verschneidungslinie bearbeitet, welche der Werkzeug-Einspannstelle am nächsten liegt, die Innenbohrung im übrigen Bereich unverletzt lässt.

Der Erfindung liegt somit die Aufgabe zugrunde, das gattungsgemäße Werkzeug und das damit arbeitende Entgratverfahren derart weiter zu bilden, dass unter Beibehaltung einer einfachen Bewegungssteuerung für das Werkzeug, beliebige Verschneidungslinien zwischen Bohrung und Ausnehmung wirksam entgratet werden können, ohne die Innenoberfläche der Bohrung zu beschädigen bzw. über Gebühr zu verkratzen.

Diese Aufgabe wird hinsichtlich des Werkzeugs mit den Merkmalen des Anspruchs 1 und hinsichtlich des Verfahrens durch den Anspruch 37 gelöst.

Die erfindungsgemäße geometrische Gestaltung des Schneidkopfs, dessen Keulen- oder Tropfenform so modifiziert ist, dass er im Bereich seines größten Außendurchmessers eine glatte geschlossene Oberfläche aufweist, stellt sicher, dass der Schneidkopf selbst dann, wenn er während seiner Taumel-Schabbewegung eine mit der Verschneidungslinie nicht speziell koordinierte axiale Belegung ausführt, um die gesamte Verschneidungslinie zu erfassen, die Innenoberfläche der Bohrung auch dann nicht verletzen kann, wenn er die der Werkzeug-Einspannstelle am nächsten liegende Stelle der Verschneidungslinie bearbeitet. Denn die zumindest eine Schneidkante kann nur dort mit der Verschneidungslinie in EIngriff treten, wo die glatte geschlossene Oberfläche aus der Bohrung vorstehen kann. Damit eignet sich das erfindungsgemäße Werkzeug insbesondere zur Bearbeitung von Mündungs-Verschneidungslinien von Bohrungen, deren Achse mit der Innenoberfläche bzw. mit der Achse der Ausnehmung einen spitzen, vorzugsweise einen kleinen spitzen Winkel einschließt.

Dabei ergibt sich der zusätzliche Vorteil, dass mit dem erfindungsgemäßen Werkzeug der Entgratvorgang wirtschaftlicher durchgeführt werden kann. Denn der Zeitaufwand für das Entgraten kann verkürzt werden, weil der Drehantrieb für das Werkzeug nach Abschluss des Entgratvorgangs nicht mehr abgeschaltet werden muß, bevor das Werkzeug in die nächste Bohrung eingeführt wird. Aufgrund der glatten geschlossenen Oberfläche im Bereich des größten Durchmessers des Schneidkopfs kann dieser die Bohrungskante selbst dann nicht verletzen, wenn das Werkzeug nur verhältnismäßig grob bezüglich der Bohrungsachse positioniert wird.

Das erfindungsgemäße Werkzeug kann gleichermaßen zum Entgraten von innenliegenden Verschneidungslinien wie von außenliegenden Verschneidungslinien herangezogen werden.

Zwar ist aus dem Dokument US 6,846,226 B2 bzw. aus dem Dokument EP 1294532 B1 bereits ein Entgratgerät bekannt, mit dem Verschneidungslinien von Bohrungen unter Schonung der Innenoberfläche der Bohrungen entgratet werden können. Dabei hängt ein Entgratkopf an einem dünnen Schaft, der entweder über ein elastisches Gelenk mit einer Antriebwelle gekoppelt ist oder selbst durch geeignete Auswahl von Material oder Geometrie bereits derart extrem flexibel ist, dass der Entgratkopf durch sporadisches Anschlagen gegen die relativ bewegte Wandung eine mehr oder weniger unkontrollierte Schwabbelbewegung ausführt. Die Achse des Entgratkörpers wird für den Entgratvorgang nicht zentral zu einer Bohrung gehalten. Sie muss entweder zur Richtung der Antriebsachse angestellt oder quer zur Achsrichtung verschoben werden, um den Kopf in die Stellung zu bringen, die für das Entgraten erforderlich ist. Im weiteren Unterschied zum Erfindungsgegenstand weist der bekannte Entgratkopf auch keine tropfenförmige Gestalt auf. Vielmehr hat der Schneidkopf einen aufgesetzten Kragen aus einem nichtschneidendem Material, so dass sich ein Durchmessersprung ergibt.

Vorteilhafte Weiterbildungen sind Gegenstand der Unteransprüche.

Die auf den Schneidkopf einwirkende Radialkraft zu dessen vorzugsweise gesteuerter radialer Auslenkung kann auf verschiedene Art und Weise erzeugt werden. Vorteilhafte Varianten sind Gegenstand der Unteransprüche 2 bis 7 bzw. 8 bis 10.

Eine besonders einfache Konstruktion erhält man mit der Weiterbildung der Unteransprüche 2 bis 7. Hier wird ein in gewöhnlichen Bearbeitungszentren ohnehin vorhandenes unter Druck stehendes Strömungsmittel, wie z.B. ein bei der spanabhebenden Bearbeitung zum Einsatz kommendes Kühl- und Schmiermittel, dazu herangezogen, den Schneidkopf radial auszulenken, so dass er die entgratenende Funktion erfüllen.

Bei dieser Auslenkung spielen sowohl die durch den Staudruck des Strömungsmittels im Bereich des Stichkanals als auch die durch die Umlenkung der Strömungsmittelströmung hervorgerufenen Impulskräfte eine Rolle, so dass die wirksame Radialkraft gut steuerbar bleibt.

Über den Druck des Strömungsmittels und/oder die Geometrie des Werkzeugschafts lässt sich die radiale Auslenkung des Werkzeugschafts und damit des Schneidkopfs in weiten Grenzen steuern, so dass auch das radiale Spiel des Schneidkopfs in der Ausnehmung verhältnismäßig grob vorgegeben werden kann. Dadurch wird das Werkzeug billiger. Aber auch die Steuerung der

Antriebsvorrichtung, in der das Werkzeug aufgenommen wird, lässt sich dadurch stark vereinfachen, da das Werkzeug verhältnismäßig grob zur Achse der Ausnehmung positioniert werden kann. Das Werkzeug kann dadurch auch in relativ ungenau arbeitende Maschinen eingespannt werden. Es positioniert sich mit seiner am Innenumfang der Ausnehmung schabenden Bewegung selbst. Es wurde festgestellt, dass das erfindungsgemäße Arbeitsprinzip für alle gängigen Werkstoffe, d.h. für Stahl, Grauguss bis hin zu Kunststoffen anwendbar ist.

Grundsätzlich genügt ein einziger Stichkanal, um im Bereich zwischen seiner Mündungsöffnung und der Innenwandung der Ausnehmung eine Druckkraft aufzubauen, die das Werkzeug ausreichend radial auslenkt, damit die zumindest eine Schneidkante wirksam in Eingriff gelangt.

Eine besonders effektive Art der Bearbeitung ergibt sich dann, wenn mehrere Stichkanäle vorgesehen sind. Diese Modifikation erlaubt ferner die Anbringung mehrerer Schneidkanten am Schneidkopf, so dass die erforderliche Bearbeitungszeit weiter herabgesetzt werden kann. Die Stichkanäle können auch in axialer Richtung gestaffelt sein.

Es hat sich gezeigt, dass besonders vorteilhafte Ergebnisse mit Abmessungen des Stickkanals gemäß Anspruch 3 erzielt werden können.

Über die Länge des Schafts lässt sich die radiale Flexibilität des Werkzeugs leicht steuern, wobei sich der vorteilhafte Nebeneffekt ergibt, dass ein langer Schaft dazu führt, dass das Werkzeug universeller eingesetzt werden kann, d.h. zum Entgraten von Bohrungen, die verhältnismäßig weit im Inneren der Ausnehmung münden. Das Einsatzgebiet liegt vorzugsweise bei Schaftlängen im Bereich von 5 bis 1000 mm.

Der Stichkanal kann grundsätzlich beliebig ausgerichtet sein und auch gekrümmt, beispielsweise wendelförmig verlaufen. Vorzugsweise wird der zumindest eine Stickkanal geradlinig ausgebildet, wobei er entweder von einer Bohrung oder von einer erodierten Ausnehmung gebildet sein kann. Im letzteren Fall verbleibt eine größere Flexibilität bei der Gestaltung des Kanalquerschnitts.

Wenn die zumindest eine Schneidkante zu einer Axialebene des Werkzeugs unter einem Winkel angestellt ist, kann auf die Schnittbedingungen beim Entgraten gezielt Einfluss genommen werden, wodurch die Arbeitsgenauigkeit verbessert wird.

Gute Ergebnisse konnten mit einem radialen Spiel gemäß Anspruch 17 erzielt werden, wobei dieses Spiel an die Höhe des Arbeitsdrucks des Strömungsmittels gekoppelt ist.

Eine sehr einfache Alternative für die Ausbildung der Radialkraft-Erzeugungseinrichtung ist Gegenstand der Ansprüche 8 bis 10. Hier wird eine Unwucht des Werkzeugs zur gesteuerten radialen Auslenkung des Schneidkopfs herangezogen. Über die Drehzahl lässt sich auf einfache Weise das Absolutmaß der radialen Auslenkung steuern, wodurch es möglich wird, den Schneidkopf beispielsweise bei relativ kleiner Drehzahl in die Ausnehmung oder Bohrung einzuführen und anschließend die Drehzahl ausreichend weit an zu heben, damit die gewünschte Entgratbewegung der zumindest einen Werkzeugschneide hervorgerufen wird. Die Gestaltung des Schneidkopfs bzw. der Schneiden kann bei dieser Ausführungsform in gleicher Weise wie bei der vorstehend beschriebenen Variante vorgenommen werden.

Eine weitere Möglichkeit der Beeinflussung der radialen Auslenkung besteht in der Optimierung der Geometrie des Werkzeug-Schafts. Mit der Weiterbildung nach Anspruch 13 lässt sich die erforderliche radiale Flexibilität des Schafts weiter verbessern.

Mit der Weiterbildung des Anspruchs 15 wird das Einführen des Werkzeugs weiter vereinfacht. Das Werkzeug kann grundsätzlich auch dazu verwendet werden, eine Eintrittsöffnung einer Bohrung auf der Außenseite eines Körpers bzw. eines Zylinders zu entgraten, wobei in diesem Fall entweder das Werkzeug von innen nach außen in die Bohrung eingeführt wird oder der Schneidkopf zu beiden Seiten der glatten geschlossenen Oberfläche eine Schneidkante aufweist. Eine auf das Entgraten innenliegender Verschneidungslinien zugeschnittene Variante ist Gegenstand des Anspruchs 15. Die auf der hinterschnittenen Seite des Schneidkopfs ausgebildete Schneidkante nähert sich dabei von innen der innenliegenden Austrittsöffnung der Bohrung. Die Taumelbewegung des Schneidkopfs schabt dabei allmählich den Bohrungsgrat, wenn dieser nicht in einer auf der Bohrungsachse senkrechten Ebene liegt, bereichsweise ab, während die übrigen Bereiche der Bohrungsinnenwand, die sich axial versetzt zu der Entgratungsstelle befinden, von der glatten geschlossenen Oberfläche überstrichen werden, die aber die Innenoberfläche der Bohrung unbeeinflusst lässt.

Für die Materialwahl des Werkzeugs gibt es praktisch keine Einschränkungen. Vorteilhafte Materialien für den Schneidkopf sind im Anspruch 18 angegeben, für den Schaft im Anspruch 23, wobei auch geeignete Beschichtungen, insbesondere in der Ausgestaltung nach den Ansprüchen 24 bis 36 Anwendung finden können.

Gemäß Anspruch 6 ergibt sich der besondere Vorteil, dass im Werkzeug mit einfachen Mitteln die Schnittstelle zum Strömungsmittelanschluss hergestellt ist.

Mit der Weiterbildung nach Anspruch 7 wird das Werkzeug zu einer leicht handhabbaren Einheit, die in gängige Werkzeugaufnahmen einsetzbar ist. Dabei bildet der Befestigungs- und Fixierungskörper gleichzeitig den Körper zur Einspeisung des Strömungsmittels. Dieser Körper hat vorzugsweise die Gestalt eines einfachen länglichen Hohlzylinders, der mit dem Schaft des Werkzeugs sogar verklebt werden kann. Mit einer geeigneten korrosionsbeständigen Beschichtung versehen, kann dieser Körper aus gewöhnlichem Stahl hergestellt werden, weil die Fixierung in der Werkzeugaufnahme dadurch erfolgen kann, dass der zylindrische Körper mittels des auf der Rückseite einwirkenden Strömungsmitteldrucks gegen eine Schulterfläche in der Werkzeugaufnahme gedrückt wird.

Wenn der Spanwinkel bzw.- bei der Ausbildung als Fräs-oder Reibwerkzeug - der Rückspanwinkel positiv, beispielsweise in einem Größenbereich von 0 bis 10°, vorzugsweise bis 5° gehalten wird, kann die Schneidkante die spanabhebende Wirkung bereits bei relativ geringen Radial-Druckkräften entfalten, so dass der Strömungsmitteldruck kleiner gehalten werden kann.

Mit der Ausgestaltung nach Anspruch 21 ergibt sich eine eher schabende Wirkung der zumindest einen Schneidkante. Die Schneidkanten erhalten eher das Profil einer Feile, mit der Folge, dass mit einem im Vergleich zur Ausführung nach Anspruch 20 höheren Strömungsmitteldruck gearbeitet werden sollte.

Wenn die zumindest eine Schneidkante im Wesentlichen wendelförmig verläuft, ergibt sich eine für das Entfernen des Gratspans besonders günstige Schneidengestaltung.

Die Weiterbildung des Werkzeugs gemäß Anspruch 23 hat insbesondere dann Vorteile, wenn der Schaft des Werkzeugs extrem dünn ausgeführt ist, beispielsweise für den Fall, dass der Entgratungsvorgang im Bereich einer Bohrung durchgeführt werden soll, die einen Durchmesser von unter 1 mm hat und sich an eine verhältnismäßig tiefe Bohrung ebenfalls kleinen Durchmessers - von beispielsweise bis zu etwa 4 mm anschließt. Die Materialwahl stellt sicher, dass das Werkzeug auch mit einer derart dünnen Schaftgestaltung ausreichend stabil bleibt, um den Schneidkopf auch nach wiederholter Benutzung exakt zu zentrieren. Die Bearbeitungsgenauigkeit wird dadurch besonders gut steuerbar. Der Schneidkopf selbst kann dann aus anderen Materialien gefertigt und beispielsweise lösbar am Schaft des Werkzeugs befestigt sein.

Es hat sich gezeigt, dass das Strömungsmittel selbst von einem gasförmigen Medium, wie z.B. Luft gebildet sein kann, um die erforderlichen Kräfte zur Auslenkung des Werkzeugschafts zu erzeugen. Selbstverständlich können alle gängigen Kühl- und Schmiermittel zum Einsatz kommen, auch solche der Mindermengenschmierung.

Vorzugsweise arbeitet die Vorrichtung mit einem Strömungsmitteldruck in einem Bereich von 3 bis 3000 bar.

Wenn das Werkzeug einen Befestigungs- und Fixierungskörper gemäß Anspruch 7 hat, ist es vorteilhaft, wenn dieser nach Art eines Bajonettverschlusses in der Werkzeugaufnahme aufgenommen ist.

Ein besonderer Aspekt der vorliegenden Erfindung besteht darin, dass der - verhältnismäßig hohe - Strömungsmitteldruck dazu herangezogen wird, das Werkzeug in der Werkzeugaufnahme axial und in Umfangsrichtung zu fixieren. Es hat sich nämlich gezeigt, dass die Schnittkräfte beim Entgraten mit Leichtigkeit durch die Reibkraft aufgenommen werden kann, die entsteht, wenn der Befestigungs- und Fixierungskörper vom Strömungsmitteldruck gegen eine Halteschulter gedrückt wird. Dies wird dadurch noch erleichtert, dass der Befestigungs- und Fixierungskörper einen größeren Durchmesser als der Schneidkopf erhalten kann. Eine solche Ausbildung ist in der Europäischen Patentanmeldung EP 1 362 659 A1 beschrieben.

Die wesentlichen Elemente des erfindungsgemäßen Verfahrens zum Entgraten von Bohrungen, beispielsweise von Bohrungen, die seitlich in eine im wesentlichen zylindrische Ausnehmung münden, sind Gegenstand des Anspruchs 37.

Das Verfahren des Anspruchs 38 hat den besonderen Vorteil bei der Serienbearbeitung von Bohrungen, wenn es darauf ankommt, eine Vielzahl von Bohrungen in kürzester Zeit zuverlässig zu entgraten. Der Drehantrieb des Werkzeugs muß erfindungsgemäß nach dem Verlassen einer Bohrung nicht abgeschaltet werden, bevor das Werkzeug in die nächste Bohrung einfährt.

Weitere vorteilhafte Ausgestaltungen sind Gegenstand der übrigen Unteransprüche.

Nachstehend werden anhand schematischer Zeichnungen mehrere Ausführungsbeispiele der Erfindung näher erläutert. Es zeigen:
Figur 1 die Seitenansich eines Werkzeugs zum Entgraten von Bohrungen, die seitlich in eine beispielsweise zylindrische Ausnehmung münden;
Figur 2 die Einzelheit II in Figur 1;
Figur 3 den Teilschnitt III-III in Figur 2;
Figuren 4 bis 6 in vergrößertem Maßstab Ansichten des Werkzeugs nach den Figuren 1 bis 3 in den verschiedenen Betriebsphasen des Bearbeitungsverfahrens;
Figur 7 eine schematische Teil-Ansicht einer Variante des Werkzeugs nach Figur 1 bis 3 mit angedeuteter Aufnahme und Fixierung in einer Werkzeugaufnahme;
Figur 8 die Ansicht "VIII" in Figur 7;
Figuren 9A bis 9D schematische Ansichten modifizierter Schneidköpfe des Werkzeugs;
Figur 10 die schematische Ansicht einer Bohrung, die mit einem besonders gestalteten erfindungsgemäßen Werkzeug an besonders unzugänglichen Stellen entgratet werden soll;
Figur 11 die Darstellung der Einzelheit "XI" in Figur 10; und
Figur 12 in einem im Vergleich zur Figur 11 etwas verkleinertem Maßstab die Ansicht eines Werkzeugs, mit dem die Bearbeitungsaufgabe gemaäß Figur 10, 11 gelöst werden kann.

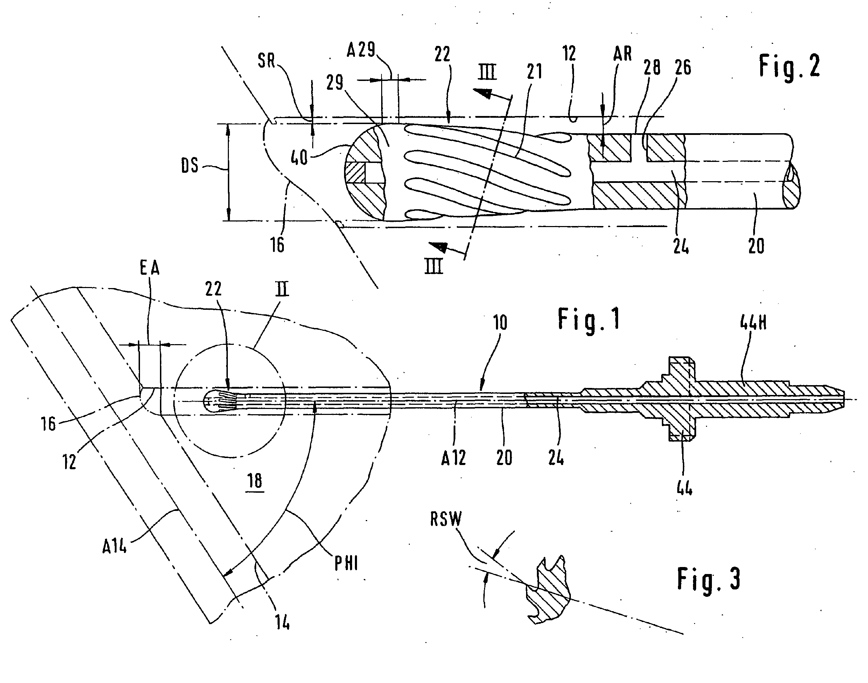

In Figur 1 ist, mit dem Bezugszeichen 10 ein beispielsweise drehantreibbares, vorzugsweise rotationssymmetrisches Nachbearbeitungswerkzeug in der Ausgestaltung als Entgratwerkzeug bezeichnet, mit dem es möglich ist, auf besonders wirtschaftliche Weise und möglichst zuverlässig Bohrungen 12, die unter einem spitzen Winkel PHI seitlich in eine im wesentlichen zylindrische Ausnehmung 14 in einem Werkstück 18 münden, an ihren radial inneren Enden, d.h. im Bereich ihrer Verschneidungslinie 16 zu entgraten. Es soll jedoch an dieser Stelle bereits hervorgehoben werden, dass das Werkzeug auch statisch sein kann und statt dessen oder zusätzlich das Werkstück in eine Drehbewegung versetzt wird. Außerdem kann das Werkzeug auch zum Entgraten von Mündungsöffnungen an der beispielsweise zylindrischen Außenoberfläche des Werkstücks herangezogen werden.

Bei dem Werkzeug sitzt an einem Schaft 20 ein Schneidkopf 22, der zumindest eine Schneidkante 21 - im gezeigten Beispiel eine Vielzahl von gleichmäßig über den Umfang verteilten wendelförmigen Schneidkanten - hat, die eine spanabhebende Bearbeitung durchführen kann. Vorzugsweise hat der Schneidkopf eine Vielzahl von Schneidkanten 21, die sich zumindest abschnittsweise in axialer Richtung erstrecken, wie aus Figur 2 ersichtlich ist.

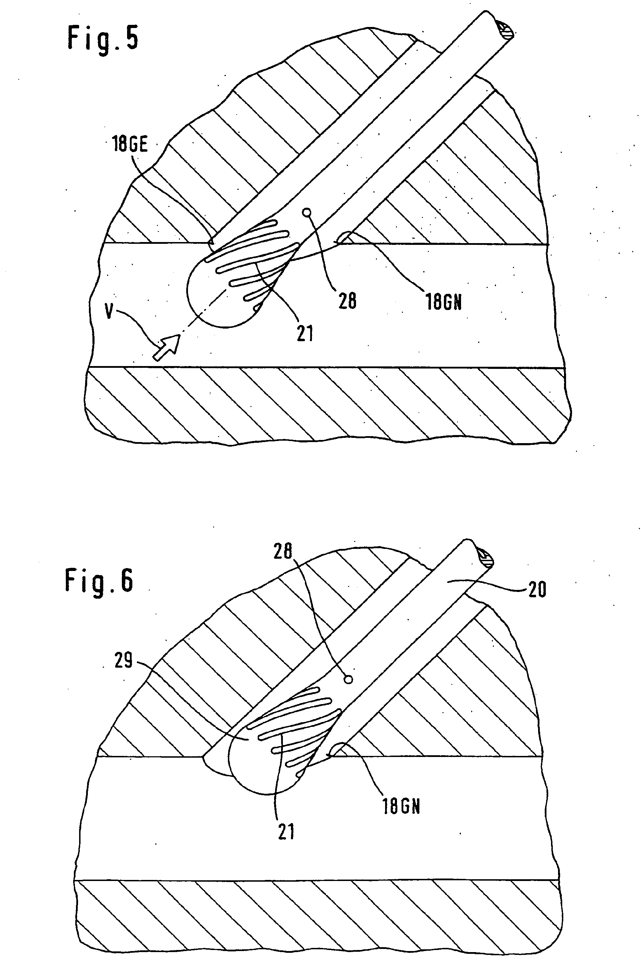

Das Werkzeug hat einen innenliegenden Strömungsmittelkanal 24, von dem im Bereich des Schafts 20 zumindest ein Stichkanal 26 ausgeht. Dieser Stichkanal 26 ist so angeordnet, dass er mit seiner Mündungsöfnung 28 in vorbestimmtem Radialabstand AR - in Figur 2 vergrößert dargestellt - zur Innenoberfläche der Bohrung 12 zu liegen kommt, wenn das Werkzeug mit seinem Schneidkopf 22 so weit in die Bohrung 12 eingefahren ist, dass die im Bereich des Schneidkopfs 22 ausgebildeten Schneidkanten 21 die Verschneidungslinie 16 vollständig überlappen, was in Figur 5 dargestellt ist.

Wie aus den Figuren 2 und 3 ersichtlich, sind die Schneidkanten 21 über den gesamten Umfang verteilt, so dass die Mündungsöffnung 28 im Umfangsabstand zu zumindest einer Schneidkante 21, beispielsweise der diametral gegenüberliegenden Schneidkante stehen.

Man erkennt ferner aus den Figuren 1 bis 3, dass der Durchmesser DS des Schneidkopfs 22 so gewählt ist, dass er mit radialem Spiel SR in die Bohrung 12 einführbar ist. Das radiale Spiel beträgt vorzugsweise bis zu einigen 1/10 mm und liegt z.B. im Bereich zwischen 0,1 und 5 mm.

Die Besonderheit des Werkzeugs besteht darin, dass es speziell für das Entgraten von Verschneidungslinien 16 zugeschnitten ist, die eine verhältnismäßig große axiale Erstreckung EA (Figur 1) haben, was beispielsweise dann der Fall ist, wenn die Achse A14 der Bohrung 14 mit der Achse A12 der Bohrung 12 einen spitzen Winkel PHI einschließt.

Der Schneidkopf 22 verbreitert sich ausgehend vom Schaft 20 konisch bis zu einem Bereich 29 größten Durchmessers, der sich an den Bereich der Schneidkanten 21 anschließt. Der Bereich des größten Durchmessers 29 hat eine glatte geschlossene Oberfläche. Die axiale Erstreckung ist variabel und in Figur 3 mit A29 bezeichnet.

An den Bereich 29 schließt sich ein gerundeter Sitzenabschnitt 40 an, der ebenfalls glatt, d.h. ohne Schneidkanten oder sonstigen Bearbeitungsprofilierungen ausgebildet ist.

Der Schneidkopf 22 hat damit im Wesentlichen Tropfenform.

Das Werkzeug nach Figur 1 bis 3 hat eine Schneidkantengestaltung derart, dass an der Schneidkante 21 ein positiver Spanwinkel bzw. Rückspanwinkel RSW ausgebildet wird. Damit wird der Schneidkante 21 eine eher schneidende Funktion übertragen. Es ist aber auch möglich, den Winkel RSW negativ zu machen.

Die axiale und rotatorische Fixierung des Werkzeugs in einer Werkzeugaufnahme erfolgt nach der Art eines Bajonettverschlusses. Der Schaft 22 trägt auf der dem Schneidkopf 22 abgewandten Seite einen Befestigungs- und Fixierungskörper 44, mit dem das Werkzeug in einer Werkzeugaufnahme dreh- und verschiebefest fixierbar ist. Dieser Körper hat im wesentlichen Rechteckform und wirkt mit einer nicht näher dargestellten hinterschnittenen Ausnehmung in der Werkzeugaufnahme zusammen, die nach der Art eines Bajonettverschlusses aufgebaut ist.

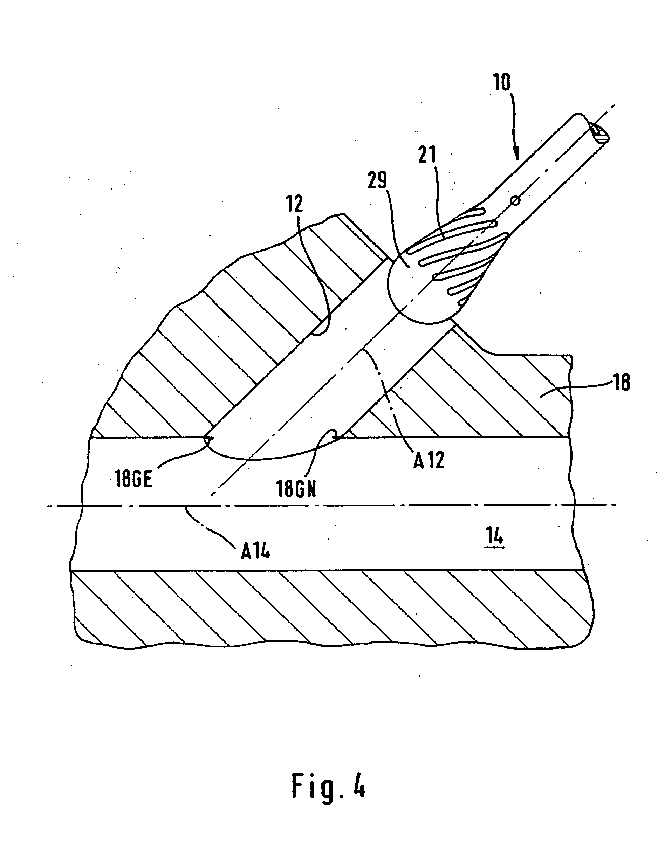

Mit diesem Aufbau des Werkzeugs lässt sich folgendes Arbeitsprinzip mit den nachfolgend anhand der Figuren 4 bis 6 beschriebenen Effekten verwirklichen:

Das Werkzeug 10 ist zur Realisierung des Drehantriebs in einer Werkzeugaufnahme dreh- und verschiebefest aufgenommen. Der Werkzeugaufnahme ist ein nicht näher dargestellter Drehantrieb, ein Vorschubantrieb und eine Strömungsmitteldruckquelle zugeordnet. Der Vorschub und oder der Drehantrieb kann auch für das Werkstück 18 vorgesehen sein. Für das Werkstück 18 kann auch ein zusätzlicher Drehantrieb und/oder Vorschub vorgesehen sein.

Wenn die Bohrung 12 im radial inneren Mündungsbereich entgratet werden soll, wird das Werkzeug 10 zunächst an die Bohrung 12 herangefahren (Stellung gemäß Figur 4). Aufgrund des radialen Spiels SR kann die Positionierung relativ ungenau erfolgen, was den Einsatz von relativ ungenauen Maschinen erlaubt. Weil ferner der Bereich 29 des Schneidkopfs, d.h. der Bereich größten Durchmessers eine glatte und geschlossene Oberfläche aufweist, können die Schneidkanten 21 weder die Mündung 17, noch die Innenoberfläche der Bohrung 12 verletzen, selbst wenn das Werkzeug bei laufendem Drehantrieb in die Bohrung 12 eingefahren wird.

Das Werkzeug 10 wird sodann in die Bohrung 12 so weit eingefahren (oder eine entsprechende kinematisch umgekehrte Bewegung sorgt für eine entsprechende Relativlage), dass die Mündungsstelle, d.h. die Verschneidungslinie 16 mit dem schematisch angedeuteten Restspan oder Grat 18G erreicht wird. Diese Position ist in Figur 5 dargestellt.

Spätestens dann, wenn die vorderste Schneidkante 21 diese Stelle erreicht hat, wird Strömungsmittel, beispielsweise Wasser oder ein anderes Werkzeug-Kühl- und Schmiermittel, oder aber auch ein gasförmiges Stzrömungsmittel unter verhältnismäßig hohem Druck von 3 bis 3000 bar in den innenliegenden Strömungsmittelkanal 24 eingespeist. Im Bereich der zumindest einen Mündungsöffnung 28 baut sich somit im Zusammenwirken mit der inneren Umfangswandung der Bohrung 14 ein entsprechend großer Staudruck auf. Zusätzlich wirkt aufgrund des durch die Strömungsmittelumlenkung hervorgerufenen Impulses eine radiale Auslenkungskraft auf den Schneidkopf 22, dem somit eine exzentrische kreisende Bewegung überlagert wird. Die Schneidkanten bewegen sich damit auf einer Zykloide.

Wenn mehrere Mündungsöffnungen 28 vorgesehen sind, so werden diese über den Umfang derart ungleichmäßig verteilt, dass die Summe der im Bereich der Mündungsöffnungen 28 zwischen dem Schneidkopf 22 und der Innenwandung der Bohrung erzeugten Staudruckkräfte den Schaft 20 in radialer Richtung auslenken können, so dass die der resultierenden Staudruckkraft gegenüberliegende Schneidkante den zu bearbeitenden Grat 18G an der Verschneidungslinie 16 berührt und an dieser entlang schneidet bzw. schabt.

Mit anderen Worten, das Werkzeug führt in diesem Moment eine der Drehbewegung überlagerte Kreisbewegung mit einem Radius aus, der sich durch den Freiraum des Schneidkopfs wie in Figur 5 gezeigt ergibt.

Die Stickkanäle 28, die auch axial gestaffelt sein können, haben beispielsweise einen Durchmesser bzw. eine lichte Weite im Bereich von 0,1 bis 5 mm.

Aus der vorstehenden Beschreibung wird klar, dass die Staudruckkräfte bei den angegebenen Drücken des Strömungsmittels groß genug sind, den flexiblen Schaft 20 ausreichend weit auszulenken. Über die Länge des Schafts, die im Bereich von 5 bis 1000 mm liegen kann, lässt sich die elastische Verformung steuern.

Aus der Figur 2 ist ersichtlich, dass die Stichkanäle 26 geradlinig ausgebildet sind. Diese Kanäle können von einer Bohrung oder von einer erodierten Ausnehmung gebildet sein.

Man erkennt aus der Figur 5, dass das Werkzeug zunächst den Grat 18G beseitigt, der von der Werkzeugaufnahme (nicht dargestellt) am weitesten entfernt ist. Der Grat 18GN wird nicht notwendiger Weise von den Schneidkanten erreicht.

Erst wenn das Werkzeug allmählich in axialer Richtung V (VGL: Figur 5) zurück gezogen wird, während die Strömungsmittelversorgung anhält, kommen die Schneidkanten 21 dem Grat 18GN nahe genug, um diesen abzutragen. Diese Phase ist in Figur 6 gezeigt: Man erkennt, dass in dieser Phase die Schneidkanten 21 durch federnde Auslenkung des Schafts 20 den Grat 18GN berühren können, dass aber ein Kontakt der Schneidkanten mit der übrigen Innenoberfläche der Bohrung 12 verhindert ist, weil ausschließlich der Bereich 29 diese Innenoberfläche berührt. Der Bereich ist aber glatt, d.h. nicht spanabhebend oder schabend ausgebildet, so dass die Innenoberfläche hinsichtlich ihrer Qualität unbeeinträchtigt bleibt.

Das Werkzeug kann aus verschleißfestem Stahl, Schnellstahl (HSS, HSSE, HSSEBM), Hartmetall, Keramik oder Cermet hergestellt und mit einer geeigneten, üblichen Beschichtung versehen sein.

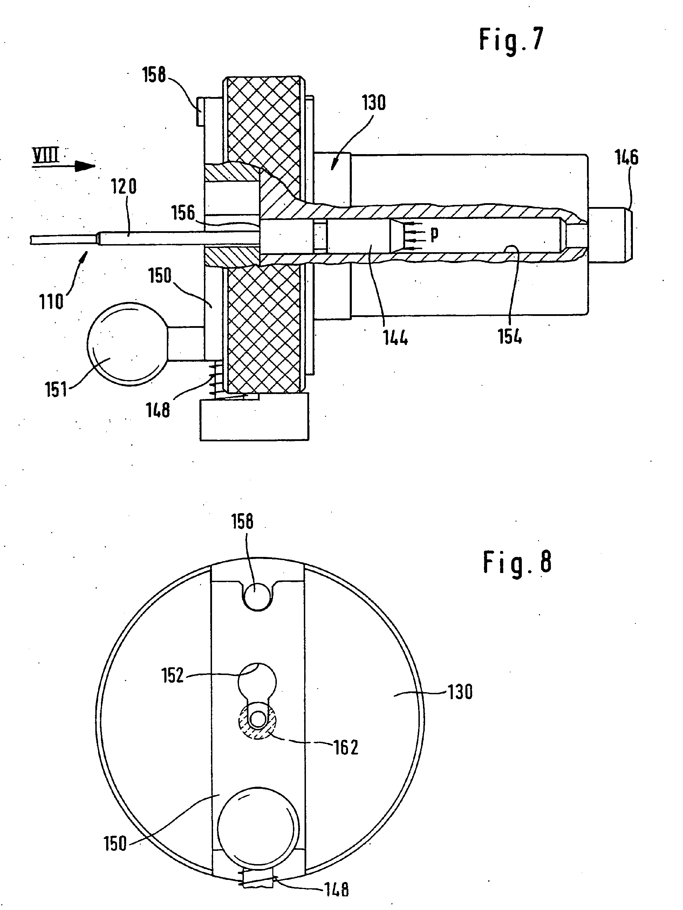

Im folgenden wird beschrieben, wie das Werkzeug in einer Werkzeugaufnahme dreh- und verschiebefest fixiert werden kann. Dazu wird auf die Figuren 7 und 8 Bezug genommen, in denen eine Variante des Werkzeugs nach Figur 1 bis 3 angedeutet ist.

Ein in den Figuren 1 bis 3 mit 44 bezeichnete Befestigungs- und Fixierkörper, der einstückig mit dem Schaft 20 ausgebildet ist, ist bei der Ausführungsform nach Figur 7 als aufgeklebte zylindrische Hülse 144 ausgebildet.Im übrigen entspricht das Werkzeug 110 dem Werkzeug 10. Diejenigen Komponenten der Ausführungsform nach Figur 7, die den Bauteilen des Werkzeugs nach Figur 1 bis 3 entsprechen, sind mit entsprechenden Bezugszeichen versehen, denen eine "1" vorangestellt ist:

Die Hülse 144 besteht aus gewöhnlichem Stahl, der vorzugsweise mit einer Korrosionsschutzbeschichtung versehen ist. Zusätzlich zur Verklebung kann eine nicht dargestellte Madenschraube verwendet werden, die die Hülse 144 mit dem Schaft 120 formschlüssig verbindet.

Mit 146 ist eine Anfasung bezeichnet, über die der fluiddichte Anschluss zur Strömungsmittelquelle erfolgt.

Die Besonderheit der Ausführungsform nach Figur 7 und 8 besteht darin, dass der Strömungsmitteldruck zur Verdreh- und axialen Lagesicherung des Werkzeugs in der Aufnahme 130 herangezogen werden kann.

Zu diesem Zweck kommt eine in der Stirnfläche der Aufnahme 130 radial gegen eine Feder 148 verschiebbare Riegelplatte 150 zur Anwendung, in der eine Schlüssellochöffnung 152 ausgebildet ist. Wenn die Riegelplatte 150 mit Betätigungsknopf 151 gegen die Kraft der Feder 148 in Figur 8 nach unten verschoben wird, kommt die größere Kreisbohrung in der Riegelplatte zur Deckung mit einer zylindrischen Ausnehmung 154 in der Werkzeugaufnahme 130, so dass das Werkzeug von vorne in die Werkzeugaufnahme eingeführt werden kann. Sobald eine Schulter 156 der Hülse 144 hinter die Gleitebene der Riegelplatte 150 gelangt, kann letztere unter Einwirkung der Feder 148 nach oben gleiten, bis sie an einem Stift 158 anschlägt. Der schlitzförmige Abschnitt der Schlüssellochöffnung 152 gleitet dabei am Außenumfang des Schafts 120 entlang. Die Hülse 144 ist damit hinter der Riegelplatte gefangen.

Wenn demnach - wie mit den Pfeilen in Figur 7 angedeutet - der Strömungsmitteldruck auf die Rückseite der Hülse 144 gegeben wird, wird die Hülse mit der schraffiert gekennzeichneten Fläche 162 gegen die Rückseite der Riegelplatte gedrückt. Diese Druckkraft ist ausreichend groß, um eine Verdrehsicherung für das Werkzeug bereit zu stellen, zumal die Schneidkanten des Werkzeugs keine dicken Späne abheben.

Vorstehend wurde bereits erwähnt, dass der Strömungsmitteldruck in verhältnismäßig hohe Bereiche angehoben werden sollte, um die ausreichende radiale Auslenkung des Werkzeugschafts sicherzustellen. Die Druckerzeugungsvorrichtung sollte in der Lage sein, einen Strömungsmitteldruck in einem Bereich von 30 bis 3000 bar zu erzeugen. Für bestimmte Gestaltungen des Werkzeugschafts und/oder der Spielpassung zwischen Werkzeug und Aufnahme können aber schon Drücke von 3 bar ausreichend sein.

Vorzugsweise wird die Relativ-Drehzahl wischen Werkzeug und Werkstück im Bereich zwischen 100 und 50000 U/min gehalten, wobei die Schnittgeschwindigkeit im Bereich zwischen 20 und 300 m/min gewählt wird.

Anstelle der strömungsmittelbetätigten Einrichtung zur Erzeugung einer umlaufenden Radialkraft kann auch eine am Schaft befestigte Unwuchtmasse vorgesehen sein. Diese kann einstückig mit dem Werkzeug ausgebildet oder aber als separates Bauteil am Werkzeug vorzugsweise lageveränderlich befestigt sein.

Auch der Schaft kann aus einem hochfesten Werkstoff, wie z.B. aus einem Hartstoff, einem Hartmetall, einem Cermet-Werkstoff oder einem Verbundwerkstoff wie z.B. einem CFK-Werkstoff bestehen und er sollte eine solche Elastizität haben, dass die beim Entgratvorgang auftretenden radialen Auslenkungen des Schneidkopfs und damit des Schafts ausschließlich im elastischen Verformungsbereich liegen.

Zumindest bereichsweise hat das Werkzeug eine Beschichtung, vorzugsweise in der Ausgestaltung als Hartstoffschicht.

Die Hartstoffschicht besteht beispielsweise aus Diamant, vorzugsweise nanokristallinem Diamant, aus TiN oder aus (Ti,Al)N, einer Mehrlagen-Schicht oder einer Schicht bestehend aus Nitriden mit den Metallkomponenten Cr, Ti und Al und vorzugsweise einem geringen Anteil von Elementen zur Kornverfeinerung besteht, wobei der Cr-Anteil bei 30 bis 65 %, vorzugsweise 30 bis 60 %, besonders bevorzugt 40 bis 60 %, der Al-Anteil bei 15 bis 35 %, vorzugsweise 17 bis 25 %, und der Ti-Anteil bei 16 bis 40 %, vorzugsweise 16 bis 35 %, besonders bevorzugt 24 bis 35 %, liegt, und zwar jeweils bezogen auf alle Metallatome in der gesamten Schicht.

Der Aufbau der gesamten Schicht kann aus einer homogenen Mischphase bestehen.

Der Aufbau der gesamten Schicht hat dabei mehrere in sich homogene Einzellagen, die abwechselnd einerseits aus (TiₓAlyY_{z})N mit x = 0,38 bis 0,5 und y = 0,48 bis 0,6 und z = 0 bis 0,04 und andererseits aus CrN bestehen, wobei vorzugsweise die oberste Lage der Verschleißschutzschicht von der CrN-Schicht gebildet ist.

Eine alternative Beschichtung besteht im Wesentlichen aus Nitriden mit dem Metallkomponenten Cr, Ti und Al und einem geringen Anteil von Elementen (κ) zur Kornverfeinerung, mit folgender Zusammensetzung:
einem Cr-Anteil von über 65%, vorzugsweise 66 bis 70%;
einem Al-Anteil von 10 bis 23%; und
einem Ti-Anteil von 10 bis 25%,
jeweils bezogen auf alle Metallatome in der gesamten Schicht.

Dabei hat die Schicht vorzugsweise zwei Lagen, wobei die untere Lage von einer dickeren (TiAlCrκ)N-Grundschicht in der Zusammensetzung als homogene Mischphase gebildet ist, die von einer dünneren CrN-Deckschicht als obere Lage abgedeckt ist. Als Element (κ) zur Kornverfeinerung dient vorzugswesie Yttrium, wobei der prozentuale Anteil am Gesamt-Metallgehalt der Schicht unter 1 at%, vorzugsweise bei bis zu etwa 0,5 at% liegt.

Schließlich kann die Hartstoffschicht entsprechend einer weiteren Alternative im Wesentlichen aus Nitriden mit dem Metallkomponenten Cr, Ti und Al und vorzugsweise einem geringen Anteil von Elementen (κ) zur Kornverfeinerung bestehen, mit einem Aufbau als Zweilagenschicht, wobei die untere Lage () von einer dickeren (TiAlCr)N- bzw. (TiAlCrκ)N-Grundschicht in der Zusammensetzung als homogene Mischphase gebildet ist, die von einer dünneren CrN-Deckschicht als obere Lage abgedeckt ist, wobei die Grundschicht
- einen Cr-Anteil von über 30%, vorzugsweise 30 bis 65%;
   - einen Al-Anteil von 15 bis 35%, vorzugsweise 17 bis 25%; und
   - einen Ti-Anteil von 16 bis 40%, vorzugsweise 16 bis 35%, besonders bevorzugt 24 bis 35%,
jeweils bezogen auf alle Metallatome in der gesamten Schicht, hat.

Die Gesamtdicke der Schicht sollte zwischen 1 und 7 µ m liegen.

Wenn eine dickere Grundschicht und eine Deckschicht zur Anwendung kommt. sollte die Dicke der unteren Schicht zwischen 1 und 6 µm und die Dicke, der dünneren Deckschicht 0,15 bis 0,6 µm betragen.

Vorzugsweise wird die Beschichtung mittels kathodischer Lichtbogen-Verdampfung oder Magnetron-Zerstäubung abgeschieden, und die die Verschleißschutzschicht tragende Oberfläche des Werkzeugs wird vorzugsweise einer Substratreinigung mittels plasmaunterstütztem Ätzen mittels Edelgas-Ionen, vorzugsweise Ar-Ionen unterzogen.

Aus der vorstehenden Beschreibung wird klar, dass das Verfahren zum Entgraten der Verschneidungslinien mit einer einfachen axialen Bewegung des Werkzeugs 10 auskommt, unabhängig davon, wie groß die axiale Erstreckung EA (Figur 1) der Verschneidungslinie ist. Es genügt, das Werkzeug langsam aus der Position nach Figur 5 in die Stellung gemäß Figur 6 zu verfahren. Die tropfenförmige gestaltung des Schneidkopfs stellt automatisch sicher, dass die Schneidkanten 21 die Innenoberfläche der Bohrung nicht berühren.

Selbstverständlich kann das Verfahren aber auch so ausgeführt werden, dass der Schneidkopf während des Entgratvorgangs zwischen den Stellungen der Figur 5 und 6 mehrfach hin- und hergefahren wird, was auch in Anpassung an den Verlauf der Verschneidungslinie erfolgen kann.

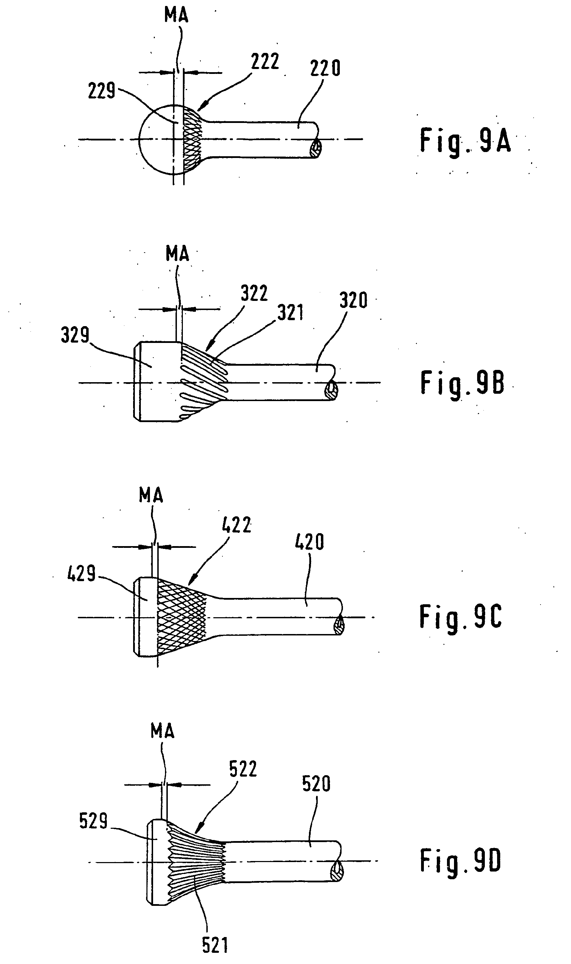

Auch bezüglich der Geometrie des Schneidkopfs ist die Erfindung nicht auf die zuvor dargestellten Ausführungsformen beschränkt. Beispiele für gängige und sinnvolle Gestaltungen des Schneidkopfs sind in den Figuren 9A bis 9D gezeigt, die sich hinsichtlich Form und Schneidengestaltung an den Formgebungen von Hartmetallfrässtiften - beispielsweise der Firma **August Rüggeberg GmbH & Co. KG, PFERD-Werkzeuge**, 51709 Marienheide - orientieren: ,

Allen Ausführungsformen der Figuren 9A bis 9D ist gemeinsam, dass der jeweilige Schneidkantenabschnitt 222, 322, 422 und 522 um ein vorbestimmtes Maß MA vor dem Bereich 229, 329, 429, 529 mit dem größten Außendurchmesser endet.

Bei der Variante nach Figur 9A oder 9C ist der Schneidkantenabschnitt von einer Verzahnung nach Art eines Mikrofrässtifts versehen, während die Ausführungsformen nach Figur 9B und 9D gröbere Schneidkanten aufweisen. Man erkennt, dass die axiale Länge des Schneidkantenabschnitts in weiten Grenzen verändert werden kann, ebenso wie die axiale Länge des Bereichs 229 bis 529. Auch die Ausrichtung der Schneidkanten - wendelformig gemäß Figur 9B oder axial nach Figur 9D - kann je nach Bedarf, z.B. in Abhängigkeit vom zu zerspanenden Werkstoff gewählt werden. Die Spitze des Schneidkopfs kann neben der Zylinderform auch Flammenform, Kugelform, Walzenrundform, Spitzbogenform, Spitzkegelform, Rundbogenform und Scheibenform haben.

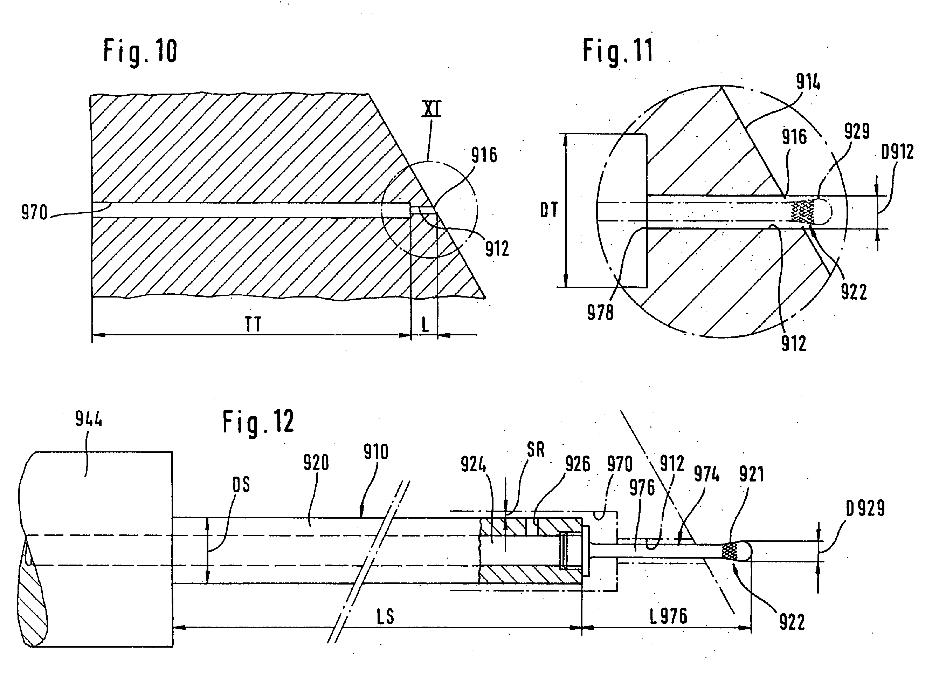

Anhand der Fig. 10 bis 12 wird ein Ausführungsbeispiel der Erfindung erläutert, mit dem es gelingt, extrem kleine und schwer zugängliche Bohrungen wirksam zu entgraten. Zur Vereinfachung der Beschreibung sind auch bei dieser Ausführungsform diejenigen Komponenten, die den Bauteilen der zuvor beschriebenene Varianten entsprechen mit ähnlichen Bezugszeichen versehen, denen jedoch eine "9" vorangestellt ist.

Bei der zu entgratenden Bohrung 912 handelt es sich um eine Bohrung von beispielsweise von 0,7 mm Durchmesser und einer Länge L von beispielsweise 6 bis 7 mm, wobei sich diese Bohrung an eine Tieflochbohrung 970 anschließt, die ebenfalls einen kleinen Durchmesser DT von beispielsweise bis zu 4 mm und eine Tiefe TT von beispielsweise 80 mm hat. In Fig. 11 ist die Konstellation im Bereich der Bohrung 912 im Maßstab M 10:1 dargestellt.

Mit strichpunktierter Linie ist der Spitzenbereich des Entgratungswerkzeugs 910 angedeutet, dessen Schneidkopf 922 soweit in die Bohrung 912 eingeführt ist, dass die Austrittskante 916 entgratet werden kann.

Das Werkzeug 910 ist in Fig. 12 maßstabsgetreu dargestellt, und zwar in einem Maßstab M von etwa 5:1.

An einen Einspannabschnitt 944 schließt sich ein Schaft 920 an, dessen Länge LS mindestens dem Maß TT der Bohrung 970 entspricht und dessen Durchmesser DS so gewählt ist, dass der Schaft 920 mit vorbestimmtem Radialspiel SR in der Bohrung 970 aufgenommen werden kann. Die Lagezuordnung zwischen der Bohrung 970 und dem für den Entgratvorgang in die Bohrung eingeführten Werkzeug 910 ist in Fig. 12 durch strichpunktierte Darstellung der Bohrung 970 angedeutet.

Der Schaft 920 hat wiederum eine Innenbohrung 924, über die Druckmittel von Einspannabschnitt 944 zuführbar ist. Mit dem Bezugszeichen 926 ist ein Radialkanal bezeichnet, dessen Mündungsöffnung der Innenwandung der Bohrung 970 in vorbestimmtem Abstand gegenüber liegt.

Der Schaft 920 trägt auf der dem Körper 944 abgewandten Seite eine sogenannte Entgratungslanze 974, die am Ende eines Stifts 976 den eigentlichen Schneidkopf 922 trägt. Der Durchmesser D929 des Schneidkopfs ist geringfügig kleiner als der Durchmesser D912 der Bohrung 912. Wie ferner aus der Fig. 12 erkennbar ist, ist die Entgratungslanze 974 lösbar am Werkzeugschaft 920 befestigt, beispielsweise derart angeschraubt, dass die Innenbohrung 924 verschlossen wird.

Aus der Beschreibung des Werkzeugs ist ersichtlich, dass bei Druckbeaufschlagung der Innenbohrung 924 durch die über den Umfang ungleichmäßige Verteilung der Radialbohrungen 926 eine radiale Auslenkung des Schafts 920 und damit des Schneidkopfs 922 hervorgerufen werden kann, wodurch der Entgratungsvorgang durchgeführt werden kann. Ebenso wie an der Stelle 916 kann auch der Bereich 978 der Bohrung 912 entgratet werden. Zu diesem Zweck kann der Schneidkopf auch auf der anderen Seite des Bereichs 929 eine Schneidkantengesteltung haben.

Die Ausgestaltung des Werkzeugs nach Fig. 12 erlaubt es, unterschiedliche Materialien für die Abschnitte 944, für den Schaft 920 und für die eigentliche Entgratungslanze 974 mit Schneidkopf 922 zu verwenden. Da der Schaft 920 im Vergleich zu seinem Durchmesser DS eine sehr große axiale Länge besitzt, hat es sich als vorteilhaft erwiesen diesen Schaft aus einem hochfesten Werkstoff herzustellen, dessen Elastizität so gewählt ist, dass die beim Entgraten auftretenden radialen Auslenkungen ausschließlich im elastischen Verformungsbereich des Werkstoffs liegen. Geeignete Materialien sind Hartstoffe, wie zum Beispiel Hartmetalle oder Cermets, aber auch Verbundwerkstoffe, wie zum Beispiel CFK-Verbundwerkstoffe.

Selbstverständlich ist die Form des Schneidkopfs 922 nicht auf die dargestellte Geometrie beschränkt. Es können vielmehr alle gängigen Geometrien zur Anwendung kommen, wobei auch die Ausgestaltung der Schneiden in weiten Grenzen variiert werden kann. Je nach axialer Länge der Bohrung 912 wird die Länge L976 des Stifts 976 ausgewählt.

Bezüglich der Gestaltung der Radialbohrung 926 besteht erneut ein großer Spielraum für die Gestaltung bzw. Variation nach Größe, Lage und Zahl, wie dies auch bei den zuvor beschriebenen Ausführungsbeispielen beschrieben worden ist.

Das Werkzeug gemäß Fig. 12 kann selbstverständlich auch durch eine in das Werkzeug integrierte Unwucht zu den für den Entgratungsvorgang erforderlichen Bewegungen angeregt werden.

Selbstverständlich sind Abweichungen von den beschriebenen Ausführungsformen möglich, ohne den Grundgedanken der Erfindung zu verlassen.

So können beispielsweise mehrere innenliegende Strömungsmittelkanäle vorgesehen sein.

Wenn das Werkzeug zum Entgraten mehrerer in Axialrichtung gestaffelter Bohrungen herangezogen wird, ist es vorteilhaft, die Strömungsmittelversorgung des Werkzeug nur dann mit angehobenen Druck auszuführen, wenn der Schneidkopf in die Nähe der zu entgratenden Bohrungsmündung gelangt.

Die Erfindung schafft somit ein Werkzeug zum Entgraten von Verschneidungslinien an den Mündungsenden von Bohrungen, wie z.B. von Bohrungen, die seitlich in eine beispielsweise zylindrische Ausnehmung münden. Das Werkzeughat einen an einem Schaft sitzenden Schneidkopf, der zumindest eine Schneidkante hat, die sich zumindest abschnittsweise in axialer Richtung erstreckt und aufgrund einer Relativdrehbewegung zwischen Werkzeug und Werkstück eine Schneidbearbeitung vornimmt. In das Werkzeug ist eine Radialkraft-Erzeugungseinrichtung intergriert, mit der der Schneidkopf, dessen Durchmesser so gewählt ist, dass er mit radialem Spiel in die Bohrung einführbar ist, bei seiner Drehbewegung vorzugsweise gesteuert radial auslenkbar ist. Der Schneidkopf hat im Wesentlichen eine Tropfenform und er weist im Bereich seines größten Außendurchmessers eine glatte geschlossene Oberfläche auf.

## Patentansprüche

1. Drehantreibbares Schaftwerkzeug zum Entgraten von Verschneidungslinien an den Mündungsenden von Bohrungen, wie z.B. von Bohrungen, die seitlich in eine beispielsweise zylindrische Ausnehmung münden, mit einem an einem Schaft (20; 120; 220; 520), der in einer Werkzeugaufnahme dreh- und verschiebefest einsetzbar und für eine Aufrechterhaltung einer Zentrierung in einem Bohrloch beim Entgratvorgang ausreichend stabil ist, sitzenden Schneidkopf (22; 222; 322; 422; 522; 922), der zumindest eine Schneidkante (21; 221; 321; 421; 521; 921) hat, die sich zumindest abschnittsweise in axialer Richtung erstreckt und aufgrund einer Relativdrehbewegung zwischen Werkzeug und Werkstück eine Schneidbearbeitung vornimmt, wobei in das Werkzeug eine Radialkraft-Erzeugungseinrichtung intergriert ist, mit der der Schneidkopf, dessen Durchmesser (DS) so gewählt ist, dass er mit radialem Spiel (SR) in die Bohrung (12; 912) einführbar und bei seiner Drehbewegung durch eine von der Radialkraft-Erzeugungseinrichtung hervorgerufene umlaufende Radialkraft vorzugsweise gesteuert radial so weit auslenkbar ist, dass das radiale Spiel unter Nutzung der Elastizität des Schaftes (20; 120; 220; 520) beseitigbar ist, wobei der Schneidkopf im Wesentlichen eine Tropfenform hat, **dadurch gekennzeichnet, dass** der Schneidkopf (22; 222; 322; 422; 522; 922) im Bereich (29; 229; 329; 429; 529; 929) seines größten Außendurchmessers (DS) eine glatte geschlossene Oberfläche aufweist.

2. Werkzeug nach Anspruch 1, **dadurch gekennzeichnet, dass** die in das Werkzeug integrierte Radialkraft-Erzeugungseinrichtung zumindest einen innenliegenden Strömungsmittelkanal (24; 124; 924) aufweist, von dem zumindest ein Stickkanal (26; 926) ausgeht, der in eine äußere Umfangsfläche des Werkzeugs mündet.

3. Werkzeug nach Anspruch 2, **dadurch gekennzeichnet, daß** der zumindest eine Stickkanal (26; 926) einen Durchmesser im Bereich von 0,1 bis 5 mm hat.

4. Werkzeug nach Anspruche 2 oder 3, **dadurch gekennzeichnet, daß** der zumindest eine Stichkanal (26) von einer Bohrung gebildet ist.

5. Werkzeug nach Anspruch 4, **dadurch gekennzeichnet, daß** der zumindest eine Stichkanal (26) von einer erodierten Ausnehmung gebildet ist.

6. Werkzeug nach einem der Ansprüche 2 bis 5, **dadurch gekennzeichnet, daß** der Schaft (20) auf der dem Schneidkopf abgewandten Seite einen Körper (44; 144) trägt, über den das Strömungsmittel in den zumindest einen Strömungsmittelkanal (24) einspeisbar ist.

7. Werkzeug nach Anspruch 6, **dadurch gekennzeichnet, daß** der Körper zur Einspeisung des Strömungsmittels gleichzeitig einen Befestigungs-und Fixierungskörper (44; 144) bildet, mit dem das Werkzeug in einer Werkzeugaufnahme (130) dreh- und verschiebefest fixierbar ist.

8. Werkzeug nach Anspruch 1, **dadurch gekennzeichnet, dass** die in das Werkzeug integrierte Radialkraft-Erzeugungseinrichtung von einer Unwuchtmasse gebildet ist.

9. Werkzeug nach Anspruch 8, **dadurch gekennzeichnet, dass** die Unwuchtmasse einstückig mit dem Werkzeug ausgebildet ist.

10. Werkzeug nach Anspruch 8, **dadurch gekennzeichnet, dass** die Umwuchtmasse als separates Bauteil am Werkzeug vorzugsweise lageveränderlich befestigt ist.

11. Werkzeug nach einem der Ansprüche 1 bis 10, **gekennzeichnet durch** eine Vielzahl von über den Umfang verteilten Schneidkanten (21; 221; 321; 421; 521; 921).

12. Werkzeug nach einem der Ansprüche 1 bis 11, **dadurch gekennzeichnet, daß** der Schaft (20) eine Länge im Bereich von 5 bis 1000 mm hat.

13. Werkzeug nach einem der Ansprüche 1 bis 12, **dadurch gekennzeichnet, daß** der Schaft (20; 920) im Verhältnis zum Durchmesser (DS) des Schneidkopfs (22; 922) verjüngt ist.

14. Werkzeug nach einem der Ansprüche 1 bis 13, **dadurch gekennzeichnet, daß** die zumindest eine Schneidkante uu einer Axialebene des Werkzeugs (10) unter einem Winkel angestellt ist.

15. Werkzeug nach einem der Ansprüche 1 bis 14, **dadurch gekennzeichnet, dass** der Schneidkopf (22) einen zylindrischen oder kugelförmigen Spitzenanbschnitt hat, und die zumindest eine Schneidkante (21) neben der glatten, geschlossenen Oberfläche (29) auf der Seite ausgebildet ist, die dem Schaft des Werkzeugs zugewandt ist.

16. Werkzeug nach Anspruch 15, **dadurch gekennzeichnet, daß** der Spitzenabschnitt auf seiner dem Schaft bgewandten Seite einen Anschnitt hat, der von einer Anfasung oder einer Rundung gebildet ist.

17. Werkzeug nach einem der Ansprüche 2 bis 16, **dadurch gekennzeichnet, daß** das radiale Spiel (SR) des Schneidkopfs (22) und/oder der Außenoberfläche (20) des Werkzeugs im Bereich der Mündungsstelle (28) des radialen Stichkanals (26) im Bereich zwischen 0,1 und 5 mm liegt.

18. Werkzeug nach einem der Ansprüche 1 bis 17, **dadurch gekennzeichnet, daß** zumindest der Schneidkopf aus einem hochfesten Werkstoff, wie z.B. aus verschleißfestem Stahl, Schnellstahl wie HSS, HSSE oder HSSEBM, Hartmetall, Keramik, Cermet oder aus einem anderen Sintermetall-Werkstoff hergestellt ist.

19. Werkzeug nach einem der Ansprüche 1 bis 18, **dadurch gekennzeichnet, daß** der Schaft (20) auf der dem Schneidkopf (22) abgewandten Seite einen Befestigungs- und Fixierungskörper (44; 144) trägt, mit dem das Werkzeug in einer Werkzeugaufnahme (130) dreh- und verschiebefest fixierbar ist.

20. Werkzeug nach einem der Ansprüche 1 bis 19, **dadurch gekennzeichnet, dass** die zumindest eine Schneidkante (21) einen positiven Spanwinkel (RSW) hat.

21. Werkzeug nach einem der Ansprüche 1 bis 19, **dadurch gekennzeichnet, dass** die zumindest eine Schneidkante einen negativen Spanwinkel hat.

22. Werkzeug nach einem der Ansprüche 1 bis 21, **dadurch gekennzeichnet, daß** die zumindest eine Schneidkante (21) im Wesentlichen wendelförmig verläuft.

23. Werkzeug nach einem der Ansprüche 1 bis 22, **dadurch gekennzeichnet, dass** zumindest der Schaft (20; 920) aus einem hochfesten Werkstoff, wie z.B. aus einem Hartstoff, einem Hartmetall, einem Cermet-Werkstoff oder einem Verbundwerkstoff wie z.B. einem CFK-Werkstoff besteht und eine solche Elastizität hat, dass die beim Entgratvorgang auftretenden radialen Auslenkungen des Schneidkopfs und damit des Schafts ausschließlich im elastischen Verformungsbereich liegen.

24. Werkzeug nach einem der Ansprüche 1 bis 23, **gekennzeichnet durch** eine zumindest bereichsweise Beschichtung, vorzugsweise in der Ausgestaltung als Hartstoffschicht.

25. Werkzeug nach Anspruch 24, **dadurch gekennzeichnet, dass** die Hartstoffschicht aus Diamant, vorzugsweise nanokristallinem Diamant, aus TiN oder aus (Ti,Al)N, einer Mehrlagen-Schicht oder einer Schicht bestehend aus Nitriden mit den Metallkomponenten Cr, Ti und Al und vorzugsweise einem geringen Anteil von Elementen zur Kornverfeinerung besteht, wobei der Cr-Anteil bei 30 bis 65 %, vorzugsweise 30 bis 60 %, besonders bevorzugt 40 bis 60 %, der Al-Anteil bei 15 bis 35 %, vorzugsweise 17 bis 25 %, und der Ti-Anteil bei 16 bis 40 %, vorzugsweise 16 bis 35 %, besonders bevorzugt 24 bis 35 %, liegt, und zwar jeweils bezogen auf alle Metallatome in der gesamten Schicht.

26. Werkzeug nach Anspruch 25, **dadurch gekennzeichnet, dass** der Aufbau der gesamten Schicht aus einer homogenen Mischphase besteht.

27. Werkzeug nach Anspruch 25 oder 26, **dadurch gekennzeichnet, dass** der Aufbau der gesamten Schicht aus mehreren in sich homogenen Einzellagen besteht, die abwechselnd einerseits aus (TiₓAl_{y}Y_{z})N mit x = 0,38 bis 0,5 und y = 0,48 bis 0,6 und z = 0 bis 0,04 und andererseits aus CrN bestehen, wobei vorzugsweise die oberste Lage der Verschleißschutzschicht von der CrN-Schicht gebildet ist.

28. Werkzeug nach Anspruch 24, **dadurch gekennzeichnet, dass** die Hartstoffschicht im Wesentlichen aus Nitriden mit dem Metallkomponenten Cr, Ti und Al und einem geringen Anteil von Elementen (κ) zur Kornverfeinerung besteht, mit folgender Zusammensetzung:
einem Cr-Anteil von über 65%, vorzugsweise 66 bis 70%;
einem Al-Anteil von 10 bis 23%; und
einem Ti-Anteil von 10 bis 25%,
jeweils bezogen auf alle Metallatome in der gesamten Schicht.

29. Werkzeug nach Anspruch 28, **dadurch gekennzeichnet, dass** die Schicht zwei Lagen hat, wobei die untere Lage von einer dickeren (TiAlCrκ )N-Grundschicht in der Zusammensetzung als homogene Mischphase gebildet ist, die von einer dünneren CrN-Deckschicht als obere Lage abgedeckt ist.

30. Werkzeug nach Anspruch 28 oder 29, **dadurch gekennzeichnet, dass** als Element (κ) zur Kornverfeinerung Yttrium dient, wobei der prozentuale Anteil am Gesamt-Metallgehalt der Schicht unter 1 at%, vorzugsweise bei bis zu etwa 0,5 at% liegt.

31. Werkzeug nach Anspruch 24, **dadurch gekennzeichnet, daß** die Hartstoffschicht im Wesentlichen aus Nitriden mit dem Metallkomponenten Cr, Ti und Al und vorzugsweise einem geringen Anteil von Elementen (κ) zur Kornverfeinerung besteht, mit einem Aufbau als Zweilagenschicht, wobei die untere Lage () von einer dickeren (TiAlCr)N- bzw. (TiAlCrκ)N-Grundschicht in der Zusammensetzung als homogene Mischphase gebildet ist, die von einer dünneren CrN-Deckschicht als obere Lage abgedeckt ist, wobei die Grundschicht
- einen Cr-Anteil von über 30%, vorzugsweise 30 bis 65%;
- einen Al-Anteil von 15 bis 35%, vorzugsweise 17 bis 25%; und
- einen Ti-Anteil von 16 bis 40%, vorzugsweise 16 bis 35%, besonders bevorzugt 24 bis 35%,
jeweils bezogen auf alle Metallatome in der gesamten Schicht, hat.

32. Werkzeug nach einem der Ansprüche 24 bis 31, **dadurch gekennzeichnet, dass** die Gesamtdicke der Schicht zwischen 1 und 7 µm liegt.

33. Werkzeug nach einem der Ansprüche 27 bis 32, **dadurch gekennzeichnet, dass** die Dicke der unteren Schicht zwischen 1 und 6 µm und die Dicke der dünneren Deckschicht 0,15 bis 0,6 µm beträgt.

34. Werkzeug nach einem der Ansprüche 24 bis 33, **dadurch gekennzeichnet, dass** die Beschichtung mittels kathodischer Lichtbogen-Verdampfung oder Magnetron-Zerstäubung abgeschieden ist.

35. Werkzeug nach einem der Ansprüche 24 bis 34, **dadurch gekennzeichnet, dass** die die Verschleißschutzschicht tragende Oberfläche des Werkzeugs einer Substratreinigung mittels plasmaunterstütztem Ätzen mittels Edelgas-Ionen, vorzugsweise Ar-Ionen unterzogen ist.

36. Werkzeug nach Anspruch 35, **dadurch gekennzeichnet, dass** das das plasmaunterstütze Ätzen mittels Niedervolt-Bogenentladung durchgeführt ist.

37. Verfahren zum Entgraten von Bohrungen, die seitlich in eine beispielsweise zylindrische Ausnehmung (14) münden, mittels eines Werkzeugs nach einem der Ansprüche 1 bis 7 und 11 bis 36, wobei der Druck des Strömungsmittels, welches durch das in die Bohrung (12) eingeführte Werkzeug (10) geleitet wird, dazu genutzt wird, den Schneidkopf (22) radial auszulenken und **dadurch** die zumindest eine Schneidkante (21) in Eingriff mit dem zu entfernenden Span gelangen zu lassen, **dadurch gekennzeichnet, dass** der Druck aufgebaut wird, nachdem der Schneidkopf (22) in die Bohrung so weit eingefahren worden ist, dass seine zumindest eine Schneidkante (21) die Mündungsöffnung (16) der Bohrung zumindest bereichsweise überlappt.

38. Verfahren nach Anspruch 37, **gekennzeichnet durch** folgenden sequentiellen Verfahrensschritte:
a) Aufbauen einer Relativ-Drehbewegung zwischen Werkzeug und Werkstück, während sich das Werkzeug außerhalb der Bohrung befindet;
b) Axiales Bewegen des Werkzeugs (10) bezüglich der Bohrung (12);
c) Aufbauen einer Strömung des unter Druck gesetzten Strömungsmittels **durch** das Werkzeug (10) bei gleichzeitiger radialer Auslenkung des Schneidkopfs (22), sobald die zumindest eine Schneidkante (21) die Mündungsöffnung (16) der Bohrung zumindest bereichsweise überlappt; und
d) Ausführen einer axialen Relativbewegung (V) zwischen Werkzeug (10) und Bohrung (12), um die gesamte Mündungsöffnung (16) dem Entgratvorgang zu unterziehen.

39. Verfahren nach Anspruch 38, **dadurch gekennzeichnet, daß** das Werkzeug (10) und/oder das Werkstück mit einer Drehzahl im Bereich zwischen 100 und 50000 U/min angetrieben wird.

40. Verfahren nach einem der Ansprüche 37 bis 39, **dadurch gekennzeichnet, daß** die Schnittgeschwindigkeit im Bereich zwischen 20 und 300 m/min gewählt wird.

## Claims

1. A rotationally drivable tool for deburring lines of intersection on the end of boreholes, such as boreholes that end laterally in a cylindrical recess, for example; said tool having a cutting head (22; 222; 322; 422; 522; 922) which is arranged on a shaft (20; 120; 220; 520) that is received in a tool holder in an axially and rotationally fixed manner and that is sufficiently stable for remaining centred in the borehole during the deburring process; and at least one cutting edge (21; 221; 321; 421, 521; 921) that extends in the axial direction, at least in sections, and carries out a machining process by a relative rotational movement between the tool and the workpiece, wherein the tool is provided with a radial force producing device, by which the cutting head having diameter (DS) that is selected such that it can be introduced into the borehole (12; 912) with radial play (SR) can be radially deflected during its rotational movement in a preferably controlled manner such that the radial play is removed by the use of an elasticity of the shaft (20; 120; 220; 520), wherein the cutting head is essentially in the form of a droplet, **characterised in that** the cutting head (22; 222; 322; 422; 522; 922) has a smooth closed surface in the region (29; 229; 329; 429; 529; 929) of the largest outer diameter thereof.

2. The tool of claim 1, **characterised in that** the radial force producing device, which is integrated in the tool, comprises at least one interior flow-agent duct (24; 124; 924) from which at least one branch duct (26; 926) emanates which ends in an outer circumferential surface of the tool.

3. The tool according to claim 2, **characterised in that** the branch duct (26; 926), of which there is at least one, has a diameter ranging from 0.1 mm to 5 mm.

4. The tool according to claim 2 or 3, **characterised in that** the branch duct (26), of which there is at least one, is formed by a borehole.

5. The tool according to claim 4, **characterised in that** the branch duct (26), of which there is at least one, is formed by an eroded recess.

6. The tool according to any one of claims 2 to 5, **characterised in that** the shaft (20) at the end facing away from the cutting head comprises a body (44; 144), by way of which the flow agent can be fed to the flow-agent duct (24), of which there is at least one.

7. The tool according to claim 6, **characterised in that** the body for feeding-in the flow agent at the same time forms an attachment- and fastening body (44; 144) by means of which the tool can be fastened in a tool-holding fixture (130) so as to be torsionally rigid and non-slidable.

8. The tool according to claim 1, **characterised in that** the radial force producing device, which is integrated in the tool, is formed by an unbalanced mass.

9. The tool according to claim 8, **characterised in that** the unbalanced mass is formed in one piece with the tool.

10. The tool according to claim 8, **characterised in that** the unbalanced mass is attached to the tool as a separate component, preferably so that the position of said unbalanced mass can be changed.

11. The tool according to any one of claims 1 to 10, **characterised by** a plural number of cutting edges (21; 221; 321; 421, 521; 921) that are distributed around the circumference.

12. The tool according to any one of claims 1 to 11, **characterised in that** the length of the shaft (20) ranges from 5 to 1,000 mm.

13. The tool according to any one of claims 1 to 12, **characterised in that** the shaft (20; 920) tapers off in relation to the diameter (DS) of the cutting head (22; 922).

14. The tool according to any one of claims 1 to 13, **characterised in that** the cutting edge, of which there is at least one, is set at an angle in relation to an axial plane of the tool (10).

15. The tool according to any one of claims 1 to 14, **characterised in that** the cutting head (22) comprises a cylindrical or spherical tip section, and the smooth cutting edge (21), of which there is at least one, is formed next to the smooth closed surface (29) at the side that faces the shaft of the tool.

16. The tool according to claim 15, **characterised in that** the tip section on its end facing away from the shaft comprises a start of a cut that is formed by a chamfer or a round shape.

17. The tool according to any one of claims 2 to 16, **characterised in that** the radial play (SR) of the cutting head (22) and/or of the external surface (20) of the tool in the region of the outlet point (28) of the radial branch duct (26) ranges between 0.1 and 5 mm.

18. The tool according to any one of claims 1 to 17, **characterised in that** at least the cutting head is made from high-strength material such as for example from wear-resistant steel, high-speed steel such as HSS, HSSE or HSSEBM, hard metal, ceramics, cermet or some other sintered metal material.

19. The tool according to any one of claims 1 to 18, **characterised in that** on its end facing away from the cutting head (22) the shaft (20) comprises an attachment- and fastening body (44; 144) by means of which the tool can be fastened to a tool-holding fixture (130) so as to be torsionally rigid and non-slidable.

20. The tool according to any one of claims 1 to 19, **characterised in that** the cutting edge (21), of which there is at least one, has a positive effective cutting angle (RSW).

21. The tool according to any one of claims 1 to 19, **characterised in that** the cutting edge, of which there is at least one, has a negative effective cutting angle.

22. The tool according to any one of claims 1 to 21, **characterised in that** the cutting edge (21), of which there is at least one, extends so as to be essentially of helical shape.

23. The tool according to any one of claims 1 to 22, **characterised in that** at least the shaft (20; 920) is made from high-strength material such as for example from a hard material, hard metal, a cermet material or a composite material such as for example a carbon-fibre reinforced plastic material and has such elasticity that radial deflections of the cutting head and thus of the shaft, which radial deflections occur during the deburring process, occur exclusively in the elastic deformation region.

24. The tool according to any one of claims 1 to 23, **characterised by** a coating, at least in some regions, preferably in the embodiment of a hard material coating.

25. The tool according to claim 24, **characterised in that** the hard material coating comprises diamond, preferably nanocrystalline diamond, made of TiN or (Ti, Al)N, a multilayer coating or a coating comprising nitrides with the metal components Cr, Ti and Al and preferably a small percentage of elements for grain refinement, wherein the Cr content is 30 to 65%, preferably 30 to 60%, particularly preferably 40 to 60%, the Al content is 15 to 35%, preferably 17 to 25%, and the Ti content is 16 to 40%, preferably 16 to 35%, particularly preferably 24 to 35%, in each case in relation to all metal atoms in the entire coating.

26. The tool according to claim 25, **characterised in that** the structure of the entire coating comprises a homogeneous mixed phase.

27. The tool according to claim 25 or 26, **characterised in that** the structure of the entire coating has several individual layers that are homogeneous per se, which alternately comprise on the one hand (TiₓAl_{y}Y_{z})N, wherein x=0.38 to 0.5, and y=0.48 to 0.6, and z=0 to 0.04, and on the other hand CrN, wherein preferably the uppermost layer of the wear-resistant coating is formed by the CrN coating.

28. The tool according to claim 24, **characterised in that** the hard material coating essentially comprises nitrides with the metal components Cr, Ti and Al and a small percentage of elements (κ) for grain refinement, with the following composition: a Cr content exceeding 65%, preferably ranging from 66 to 70%; an Al content of 10 to 23%; and a Ti content of 10 to 25%, in each instance relating to all metal atoms in the entire coating.

29. The tool according to claim 28, **characterised in that** the coating comprises two layers, wherein the lower layer is formed by a thicker (TiAlCrκ)N base coating in a composition as a homogeneous mixed phase that is covered by a thinner CrN covering coating as the upper layer.

30. The tool according to claim 28 or 29, **characterised in that** yttrium is used as an element (κ) for grain refinement, wherein the percentage of the total metal content of the coating is below 1 at %, preferably up to approximately 0.5 at %.

31. The tool according to claim 24, **characterised in that** the hard material coating essentially comprises nitrides with the metal components Cr, Ti and Al, and preferably with a small percentage of elements (κ) for grain refinement, with a structure as a double-layer coating, wherein the lower layer is formed by a thicker (TiAlCr)N base coating or (TiAlCrκ)N base coating in a composition as a homogeneous mixed phase that is covered by a thinner CrN covering coating as the upper layer, wherein the base coating comprises a Cr content exceeding 30%, preferably 30 to 65%; an Al content of 15 to 35%, preferably 17 to 25%; and a Ti content of 16 to 40%, preferably 16 to 35%, particularly preferably 24 to 35%, in each instance relating to all metal atoms in the entire coating.

32. The tool according to any one of claims 24 to 31, **characterised in that** the overall thickness of the layer is between 1 and 7 µm.

33. The tool according to any one of claims 27 to 32, **characterised in that** the thickness of the lower coating is between 1 and 6 µm and the thickness of the thinner covering coating is between 0.15 to 0.6 µm.

34. The tool according to any one of claims 24 to 33, **characterised in that** the coating is deposited by means of cathodic arc vapour deposition or magnetron sputtering.

35. The tool according to any one of claims 24 to 34, **characterised in that** the surface of the tool, which surface carries the wear-resistant coating, is subjected to substrate cleaning by means of plasma-supported etching using inert gas ions, preferably Ar ions.

36. The tool according to claim 35, **characterised in that** plasma-supported etching is carried out by means of low-voltage arc discharge.

37. A method for deburring boreholes that end laterally in a cylindrical recess (14), for example, by means of a tool according to claim 1, wherein the pressure of the flow agent that is fed through the tool (10) that has been inserted into the borehole (12) is used to radially deflect the cutting head (22) and in this way to let the cutting edge (21), of which there is at least one, engage the burr to be removed, **characterised in that** the pressure is built up after the cutting head (22) has been moved into the borehole sufficiently far for its cutting edge (21), of which there is at least one, to overlap the outlet orifice (16) of the borehole at least in some regions.

38. The method according to claim 37, **characterised by** the following sequential process steps:
a) building up a relative rotary movement between the tool and the workpiece while the tool is located outside the borehole;
b) axially moving the tool (10) in relation to the borehole (12);
c) building up a flow of the pressurised flow agent through the tool (10) with concurrent radial deflection of the cutting head (22) as soon as the cutting edge (21), of which there is at least one, overlaps the outlet orifice (16) of the borehole at least in some regions; and
d) carrying out an axial relative movement (V) between the tool (10) and the borehole (12) in order to subject the entire outlet orifice (16) to the deburring process.

39. The method according to claim 38, **characterised in that** the tool (10) and/or the workpiece are/is driven at a rotational speed ranging from 100 to 50,000 rpm.

40. The method according to any one of claims 37 to 39, **characterised in that** a cutting speed ranging from 20 to 300 m/min is selected.

## Revendications

1. Outil à arbre susceptible d'être entraîné en rotation pour ébavurer des lignes de taille aux extrémités d'embouchure d'alésages, comme par exemple des alésages qui débouchent latéralement dans un évidement, par exemple cylindrique, comprenant une tête de coupe (22 ; 222 ; 322 ; 422 ; 522 ; 922) reposant sur un arbre (20 ; 120 ; 220 ; 520), qui peut être mis en place solidairement en rotation et en translation dans un logement à outil et qui est suffisamment solide pour maintenir un centrage dans un perçage lors de l'opération d'ébavurage, ladite tête de coupe possédant au moins une arête de coupe (21 ; 221 ; 321 ; 421 ; 521 ; 921) qui s'étend au moins par tronçon en direction axiale et qui, suite à un mouvement de rotation relative entre l'outil et la pièce à oeuvrer, exécute une action de taille, dans lequel un dispositif de génération de force radiale est intégré dans l'outil, au moyen duquel la tête de coupe, dont le diamètre (DS) est ainsi choisi qu'elle peut être introduite avec un jeu radial (SR) dans l'alésage (12 ; 912), peut lors de son mouvement de rotation être défléchie radialement, par une force radiale périphérique engendrée par le dispositif de génération de force radiale, de préférence de manière contrôlée, aussi loin que le jeu radial peut être éliminé en exploitant l'élasticité de l'arbre (20 ; 120 ; 220 ; 520), dans lequel la tête de coupe a essentiellement une forme en goutte d'eau, **caractérisé en ce que** la tête de coupe (22 ; 222 ; 322 ; 422 ; 522 ; 922) présente une surface fermée lisse dans la zone (29 ; 229 ; 329 ; 429 ; 529 ; 929) de son plus grand diamètre extérieur (DS).

2. Outil selon la revendication 1, **caractérisé en ce que** le dispositif de génération de force radiale intégré dans l'outil présente au moins un canal d'écoulement de fluide (24 ; 124 ; 924) situé à l'intérieur, duquel part au moins un canal de dérivation (26 ; 926) qui débouche dans une surface périphérique extérieure de l'outil.

3. Outil selon la revendication 2, **caractérisé en ce que** ledit au moins un canal de dérivation (26 ; 926) a un diamètre dans la plage de 0,1 à 5 mm.

4. Outil selon la revendication 2 ou 3, **caractérisé en ce que** ledit au moins un canal de dérivation (26) est formé par un perçage.

5. Outil selon la revendication 4, **caractérisé en ce que** ledit au moins un canal de dérivation (26) est formé par un évidement réalisé par érosion.

6. Outil selon l'une des revendications 2 à 5, **caractérisé en ce que** l'arbre (20) porte, sur le côté détourné de la tête de coupe, un corps (44 ; 144) via lequel le fluide peut être alimenté dans ledit au moins un canal d'écoulement de fluide (24).

7. Outil selon la revendication 6, **caractérisé en ce que** le corps destiné à l'alimentation du fluide forme simultanément un corps de fixation et d'immobilisation (44 ; 144) au moyen duquel l'outil peut être fixé solidairement en rotation et en translation dans un logement à outil (130).

8. Outil selon la revendication 1, **caractérisé en ce que** le dispositif de génération de force radiale intégrée dans l'outil est formé par un balourd.

9. Outil selon la revendication 8, **caractérisé en ce que** le balourd est réalisé d'une seule pièce avec l'outil.

10. Outil selon la revendication 8, **caractérisé en ce que** le balourd est fixé comme un composant séparé sur l'outil, de préférence avec possibilité de modifier sa position.

11. Outil selon l'une des revendications 1 à 10, **caractérisé par** une pluralité d'arêtes de coupe (21 ; 221 ; 321 ; 421 ; 521 ; 921) réparties sur la périphérie.

12. Outil selon l'une des revendications 1 à 11, **caractérisé en ce que** l'arbre (20) a une longueur dans la plage de 5 à 1000 mm.

13. Outil selon l'une des revendications 1 à 12, **caractérisé en ce que** l'arbre (20 ; 920) est rétréci par comparaison au diamètre (DS) de la tête de coupe (22 ; 922).

14. Outil selon l'une des revendications 1 à 13, **caractérisé en ce que** ladite au moins une arête de coupe est disposée sous un angle par rapport à un plan axial de l'outil (10).

15. Outil selon l'une des revendications 1 à 14, **caractérisé en ce que** la tête de coupe (22) possède un tronçon de pointe cylindrique ou de forme sphérique, et ladite au moins une arête de coupe (21) est réalisée à côté de la surface fermée lisse (29) sur le côté qui est tourné vers l'arbre de l'outil.

16. Outil selon la revendication 15, **caractérisé en ce que** le tronçon de pointe présente une entaille sur son côté détourné de l'arbre, qui est formée par un chanfrein ou un arrondi.

17. Outil selon l'une des revendications 2 à 16, **caractérisé en ce que** le jeu radial (SR) de la tête de coupe (22) et/ou de la surface extérieure (20) de l'outil dans la zone de l'emplacement d'embouchure (28) du canal de dérivation radial (26) est dans la plage entre 0,1 et 5 mm.

18. Outil selon l'une des revendications 1 à 17, **caractérisé en ce que** la tête de coupe au moins est réalisée en un matériau à haute résistance, comme par exemple un acier résistant à l'usure, un acier rapide tel que HSS, HSSE ou HSSEBM, un métal dur, une céramique, un cermet, ou un autre matériau métallique fritté.

19. Outil selon l'une des revendications 1 à 18, **caractérisé en ce que** l'arbre (20) porte, sur le côté détourné de la tête de coupe (22), un corps de fixation et d'immobilisation (44 ; 144) au moyen duquel l'outil est susceptible d'être fixé solidairement en rotation et en translation dans un logement à outil (130).

20. Outil selon l'une des revendications 1 à 19, **caractérisé en ce que** ladite au moins une arête de coupe (21) présente un angle de dépouille positif (RSW).

21. Outil selon l'une des revendications 1 à 19, **caractérisé en ce que** ladite au moins une arête de coupe présente un angle de dépouille négatif.

22. Outil selon l'une des revendications 1 à 21, **caractérisé en ce que** ladite au moins une arête de coupe (21) s'étend sensiblement en forme d'hélice.

23. Outil selon l'une des revendications 1 à 22, **caractérisé en ce que** l'arbre au moins (20 ; 920) est en un matériau à haute résistance, comme par exemple une substance dure, un métal dur, un cermet ou un matériau composite, comme par exemple un matériau synthétique renforcé par des fibres de carbone, et présente une élasticité telle que les déviations radiales qui se produisent lors de l'opération d'ébavurage dans la tête de coupe et ainsi dans l'arbre restent exclusivement dans la plage de déformation élastique.

24. Outil selon l'une des revendications 1 à 23, **caractérisé par** un revêtement au moins local, de préférence sous la forme d'une couche de substance dure.

25. Outil selon la revendication 24, **caractérisé en ce que** la couche de substance dure est en diamant, de préférence en diamant nanocristallin, en TiN ou en (Ti,Al)N, en une couche à nappes multiple ou une couche constituée de nitrure avec les composants métalliques Cr, Ti et Al et de préférence avec une faible proportion d'éléments destinés à affiner les grains, la part de Cr étant de 30 à 65 %, de préférence de 30 à 60 %, et de façon particulièrement préférée de 40 à 60 %, la part de Al étant de 15 à 35 %, de préférence de 17 à 25 %, et la part de Ti étant de 16 à 40 %, de préférence de 16 à 35 %, de façon particulièrement préférée de 24 à 35 %, en se référant respectivement à tous les atomes de métal dans la totalité de la couche.

26. Outil selon la revendication 25, **caractérisé en ce que** la constitution de la couche entière est formée par une phase mixte homogène.

27. Outil selon la revendication 25 ou 26, **caractérisé en ce que** la constitution de la couche entière est composée de plusieurs nappes individuelles homogènes en elles-mêmes, constituées en alternance d'une part de (TixAlyYz)N avec x = 0,38 à 0,5 et y = 0,48 à 0,6 et z = 0 à 0,04 et d'autre part de CrN, la nappe la plus supérieure de la couche de protection anti-usure étant de préférence formée par la couche de CrN.

28. Outil selon la revendication 24, **caractérisé en ce que** la couche de substance dure est composée sensiblement de nitrure avec les composantes métalliques Cr, Ti et Al et une faible proportion d'éléments (κ) pour l'affinement de grains, présentant la composition suivante :
une part de Cr supérieure à 65 %, de préférence de 66 à 70 % ;
une part de Al de 10 à 23 % ; et
une part de Ti de 10 à 25 %, par référence à tous les atomes métalliques dans la totalité de la couche.

29. Outil selon la revendication 28, **caractérisé en ce que** la couche possède deux nappes, la nappe inférieure étant formée par une couche de base plus épaisse de (TiAlCrκ)N dans la composition à titre de phase mixte homogène, qui est recouverte d'une couche de revêtement plus mince de CrN à titre de nappe supérieure.

30. Outil selon la revendication 28 au 29, **caractérisé en ce que,** comme élément (κ) pour l'affinage de grains, on utilise de l'yttrium tel que la part exprimée en pourcentage de la teneur totale métallique de la couche est inférieure à 1 at%, de préférence jusqu'à environ 0,5 at%.

31. Outil selon la revendication 24, **caractérisé en ce que** la couche de substance dure est composée essentiellement de nitrure avec les composantes métalliques Cr, Ti et Al, et de préférence une faible part d'éléments (κ) pour l'affinage des grains, avec une constitution en couche à deux nappes, dans laquelle la nappe inférieure est formée par une couche de base plus épaisse de (TiAlCr)N ou de (TiAlCrκ)N dans la composition à titre de phase mixte homogène, qui est recouverte par une couche de couverture plus mince en CrN à titre de nappe supérieure,
la couche de base possédant
- une part de Cr supérieure à 30 %, de préférence de 30 à 65 % ;
- une part de Al de 15 à 35 %, de préférence de 17 à 25 % ; et
- une part de Ti de 16 à 40 %, de préférence 16 à 35 %, et de façon particulièrement préférée de 24 à 35 %, en se référant à tous les atomes métalliques dans la totalité de la couche.

32. Outil selon l'une des revendications 24 à 31, **caractérisé en ce que** l'épaisseur totale de la couche est entre 1 et 7 µm.

33. Outil selon l'une des revendications 27 à 32, **caractérisé en ce que** l'épaisseur de la couche inférieure est entre 1 et 6 µm et l'épaisseur de la couche de revêtement plus mince est de 0,15 à 0,6 µm.

34. Outil selon l'une des revendications 24 à 33, **caractérisé en ce que** le revêtement est déposé par vaporisation cathodique à l'arc ou par pulvérisation au magnétron.

35. Outil selon l'une des revendications 24 à 34, **caractérisé en ce que** la surface portant la couche de protection anti-usure de l'outil est soumise à un nettoyage du substrat par attaque chimique assistée au moyen d'un plasma, au moyen d'ions de gaz rares, de préférence des ions de Ar.

36. Outil selon la revendication 35, **caractérisé en ce que** l'attaque assistée au moyen d'un plasma est exécutée au moyen d'une décharge électrique à basse tension.

37. Procédé pour ébavurer des alésages qui débouchent latéralement dans un évidement (14), par exemple cylindrique, au moyen d'un outil selon l'une des revendications 1 à 7 et 11 à 36, dans lequel la pression du fluide en écoulement qui est mené à travers l'outil (10) introduit dans l'alésage (12) est utilisée pour dévier radialement la tête de coupe (22) et ainsi faire parvenir ladite au moins une arête de coupe (21) en engagement avec les bavures à supprimer, **caractérisé en ce que** la pression est établie après avoir introduit la tête de coupe (22) dans l'alésage aussi loin que ladite au moins une arête de coupe (21) chevauche au moins localement l'ouverture (16) à l'embouchure de l'alésage.

38. Procédé selon la revendication 37, **caractérisé par** les étapes séquentielles suivantes :
a) établissement d'un mouvement de rotation relatif entre l'outil et la pièce à oeuvrer pendant que l'outil se trouve à l'extérieur de l'alésage ;
b) déplacement axial de l'outil (10) par rapport à l'alésage (12) ;
c) établissement d'un écoulement du fluide mis sous pression à travers l'outil (10) avec déflexion radiale simultanée de la tête de coupe (22), dès que ladite au moins une arête de coupe (21) chevauche au moins localement l'ouverture (16) à l'embouchure de l'alésage ; et
d) exécution d'un mouvement relatif axial (V) entre l'outil (10) et l'alésage (12) afin de soumettre la totalité de l'ouverture (16) à l'embouchure à l'opération d'ébavurage

39. Procédé selon la revendication 38, **caractérisé en ce que** l'outil (10) et/ou la pièce à oeuvrer est entraîné(e) avec une vitesse de rotation dans la plage entre 100 et 50 000 tr/minute.

40. Procédé selon l'une des revendications 37 à 39, **caractérisé en ce que** la vitesse de coupe est choisie dans la plage entre 20 et 300 m/minute.
